Europäisches Patentamt

(19) European Patent Office

Office européen des brevets

(11) Veröffentlichungsnummer: **0 034 268**
**B1**

(12) **EUROPÄISCHE PATENTSCHRIFT**

(45) Veröffentlichungstag der Patentschrift:
06.04.83

(51) Int. Cl.³: **C 09 K 5/04**

(21) Anmeldenummer: **81100486.0**

(22) Anmeldetag: **23.01.81**

(54) Arbeitsstoffpaar für Sorptions-Wärmepumpen.

(30) Priorität: **31.01.80 DE 3003471**

(43) Veröffentlichungstag der Anmeldung:
**26.08.81 Patentblatt 81/34**

(45) Bekanntmachung des Hinweises auf die Patenterteilung:
**06.04.83 Patentblatt 83/14**

(84) Benannte Vertragsstaaten:
**AT BE CH FR LI NL**

(56) Entgegenhaltungen:
**DE-C-531 218**
**FR-A-716 988**
**US-A-1 914 222**

(73) Patentinhaber: **M.A.N. MASCHINENFABRIK AUGSBURG-NÜRNBERG Aktiengesellschaft, Dachauer Strasse 667 Postfach 50 06 20, D-8000 München 50 (DE)**

(72) Erfinder: **Stemmler, Bruno, Dr. rer. nat., Schützenstrasse 4, D-8047 Karlsfeld (DE)**
Erfinder: **Eckert, Manfred, Dr., Paula-Wimmer-Strasse 36, D-8060 Dachau (DE)**

Arbeitsstoffpaar für Sorptions-Wärmepumpen

Die Erfindung bezieht sich auf ein Arbeitsstoffpaar für Sorptions-Wärmepumpen bestehend aus einem Kältemittel und mindestens einem Absorptionsmittel.

Es ist bekannt das Prinzip der sogenannten thermischen Kompression, nach dem die Sorptions-Kältemaschinen arbeiten, auch bei Sorptions-Wärmepumpen einzusetzen. Unter die Sorptions-Wärmepumpen fallen die sogenannten Absorptions-und Resorptions-Wärmepumpen. Danach wird Wärmeenergie hoher Temperatur und gleichzeitig Wärmeenergie niedriger Temperatur in eine solche mittlerer Temperaturbereiche abgesenkt bzw. angehoben. Die Leistungsfähigkeit einer derartigen Wärmepumpe hängt unter anderem von den Eigenschaften des im Kreisprozess verwendeten Stoffpaares für das Kältemittel und das Absorptionsmittel ab.

Der Einsatz des obigen Prinzips im Wärmepumpenbetrieb ist jedoch gewissen Randbedingungen unterworfen, die die Verwendung der für Kältemaschinen üblichen Arbeitsstoffpaaren nicht im allgemeinen zulassen. Das bei Absorptions-Kältemaschinen bewährte Ammoniak/Wasser-Paar (Kältemittel/Absorptionsmittel-Paar) ist beispielsweise grundsätzlich auch in der Sorptions-Wärmepumpe anwendbar. Jedoch hat es den Nachteil, dass es durch die hohen Verfahrens-, insbesondere Kondensationsdrücke bzw. des niedrigen Arbeitsmittel-Konzentrates zu einer niedrigen Leistungsfähigkeit der Wärmepumpe führt. Ausserdem wäre Ammoniak nur unter Zuhilfenahme entsprechender Sicherheitseinrichtungen als Wärmepumpen-Arbeitsmittel in Wohngebäuden einsetzbar. Ein weiterer Nachteil des $NH_3/H_2O$–Paares ist, dass aufgrund dessen verhältnismässig niedrigen Siedetemperaturunterschiedes ein hoher Rektifikationsaufwand getrieben werden muss. In der Trennphase des Arbeitsprozesses, in der das Ammoniak aus der Ammoniak-Wasser-Lösung durch Austreibungsprozess ausgetrieben wird, wird nämlich auch Wasser verdampft. Dieser Wasserdampf muss anschliessend dann durch das Rektifikationsverfahren ausgeschieden werden.

Es wurde ferner in Erwägung gezogen, das in kompakten Absorptions-Kältemaschinen verwendete Wasser/Lithiumbromid–Stoffpaar in den Wärmepumpenbetrieb einzusetzen. Es hat sich jedoch herausgestellt, dass dieses Stoffpaar für einen umfassenden Einsatz der Sorptions-Wärmepumpe wenig geeignet ist. Denn aufgrund der Kristallisationsgefahr dieses Stoffpaares ist der Temperaturbereich für die Austreibung des Kältemittels, nämlich Wasser aus der Lösung stark begrenzt. Ausserdem sind Verdampfungstemperaturen dieses Kältemittels unter 0°C nicht möglich, so dass die Wärmepumpe nur in den Fällen einsetzbar ist, in denen die Wärmequelle, nämlich Wasser oder Luft aus der Umgebung, ein relativ hohes Temperaturniveau hat.

Der Erfindung liegt die Aufgabe zugrunde, Arbeitsstoffpaare zu finden, die für den Einsatz in Sorptions-Wärmepumpen unter Vermeidung der Nachteile der obigen bekannten Stoffpaare geeignet sind.

Die Aufgabe wird erfindungsgemäss dadurch gelöst, dass das Kältemittel Methylamin ist, und dass mindestens ein Absorptionsmittel der Gruppe der Diäthylenglykoldialkyläther oder der Alkoxyalkanole zugehört.

Diese Stoffpaare zeichnen sich durch für den Wärmepumpenbetrieb allgemein gut geeignete Eigenschaften aus. Es weist einen hohen Siedetemperaturunterschied auf, der über 165°C liegt, wodurch eine Rektifikation des Kältemittels nicht oder nur im geringen Masse notwendig wird. Der Rektifikationsaufwand ist im Vergleich zum System $NH_3/H_2O$ vernachlässigbar klein. Hierdurch wird auch der technische Bauaufwand der Pumpe geringer als bei der Verwendung der bekannten Arbeitsstoffpaare.

Ferner ist eine Kristallisationsgefahr in breiten Prozesstemperaturbereichen nicht gegeben. Mit den erfindungsgemässen Mitteln wird eine gute Leistungsfähigkeit erreicht, die gegenüber der mit den derzeit üblichen Arbeitsstoffpaaren erreichbaren Werte höher liegt.

Durch den niedrigen Dampfdruck des Methylamin arbeitet die Wärmepumpe mit entsprechend niedrigen Drücken, wodurch eine fertigungstechnisch einfachere und gewichtsmässig leichtere und damit wirtschaftlichere Wärmepumpe verwendet werden kann.

Besonders vorteilhaft ist es, wenn das Lösungsmittel eines der Stoffe Diäthylenglykoldimethyläther, Diäthylenglykoldiäthyläther oder 3-Methoxybutanol oder eine Mischung aus zwei dieser Stoffe oder aus allen drei Stoffen ist.

Diese Mittel weisen über die obigen Vorteile hinaus eine besonders gute Absorptionsfähigkeit für das Methylamin auf, wodurch eine ausreichend hohe Sorptionsgeschwindigkeit gewährleistet ist.

**Patentansprüche**

1. Arbeitsstoffpaar für Sorptions-Wärmepumpen, bestehend aus einem Kältemittel und mindestens einem Absorptionsmittel, dadurch gekennzeichnet, dass das Kältemittel Methylamin ist, und dass mindestens ein Absorptionsmittel der Gruppe der Diäthylenglykoldialkyläther oder der Alkoxyalkanole zugehört.

2. Arbeitsstoffpaar nach Anspruch 1, dadurch gekennzeichnet, dass das Absorptionsmittel Diäthylenglykoldimethyläther ist.

3. Arbeitsstoffpaar nach Anspruch 1, dadurch gekennzeichnet, dass das Absorptionsmittel Diäthylenglykoldiäthyläther ist.

4. Arbeitsstoffpaar nach Anspruch 1, dadurch gekennzeichnet, dass das Absorptionsmittel 3-Methoxybutanol ist.

5. Arbeitsstoffpaar nach Anspruch 1, dadurch gekennzeichnet, dass das Absorptionsmittel sich aus mindestens zwei der Stoffe Diäthylenglykoldimethyläther, Diäthylenglykoldiäthyläther und 3-Methoxybutanol zusammensetzt.

**Revendications**

1. Couple de matières de travail pour pompes à chaleur à absorption, constitué par un agent frigorifique et au moins un agent d'absorption, caractérisé en ce que l'agent frigorifique est la mé-thylamine et en ce qu'au moins un agent d'absorption appartient au groupe des éthers diéthylèneglycol-diéthyliques ou des alcoxy-alcanols.

2. Couple de matières selon la revendication 1, caractérisé en ce que l'agent d'absorption est l'éther diéthylèneglycol-diméthylique.

3. Couple de matières selon la revendication 1, caractérisé en ce que l'agent d'absorption est l'éther diéthylèneglycol-diéthylique.

4. Couple de matières selon la revendication 1, caractérisé en ce que l'agent d'absorption est le 3-méthoxy-butanol.

5. Couple de matières selon la revendication 1, caractérisé en ce que l'agent d'absorption se compose au moins de deux des produits éthers-diéthylèneglycol-diméthylique, éther–diéthylèneglycol-diéthylique et 3-méthoxy-butanol.

**Claims**

1. A pair of working substances for absorption heat pumps, consisting of a refrigerant and at least one absorbent, characterised in that the refrigerant is methylamine and that at least one absorbent belongs to the group of diethylene glycol dialkyl ethers or of the alkoxy alkanols.

2. A pair of working substances according to claim 1, characterised in that the absorbent is diethylene glycol dimethyl ether.

3. A pair of working substances according to claim 1, characterised in that the absorbent is diethylene glycol diethyl ether.

4. A pair of working substances according to claim 1, characterised in that the absorbent is 3-methoxy butanol.

5. A pair of working substances according to claim 1, characterised in that the absorbent is composed of at least two of the substances: diethylene glycol dimethyl ether, diethylene glycol diethyl ether and 3-methoxy butanol.